(19) Europäisches Patentamt
European Patent Office
Office européen des brevets

(11) **EP 1 532 601 B1**

(12) **EUROPEAN PATENT SPECIFICATION**

(45) Date of publication and mention
of the grant of the patent:
**12.05.2010 Bulletin 2010/19**

(51) Int Cl.:
*G08G 1/123* (2006.01)  *H04W 84/00* (2009.01)
*G01S 3/02* (2006.01)  *G01S 19/00* (2010.01)
*G01S 1/08* (2006.01)  *H04W 4/00* (2009.01)

(21) Application number: **03734367.0**

(22) Date of filing: **04.06.2003**

(86) International application number:
**PCT/US2003/017470**

(87) International publication number:
**WO 2003/102893 (11.12.2003 Gazette 2003/50)**

(54) **SYSTEM AND METHOD FOR CDMA GEOLOCATION**

SYSTEM UND VERFAHREN ZUR GEOGRAPHISCHEN CDMA-LOKALISIERUNG

SYSTEME ET PROCEDE POUR UNE LOCALISATION GEOGRAPHIQUE CDMA

(84) Designated Contracting States:
**AT BE BG CH CY CZ DE DK EE ES FI FR GB GR HU IE IT LI LU MC NL PT RO SE SI SK TR**

(30) Priority: **04.06.2002  US 384836 P**

(43) Date of publication of application:
**25.05.2005  Bulletin 2005/21**

(73) Proprietor: **Allen Telecom, Inc**
**Beachwood, OH 44122 (US)**

(72) Inventors:
• **CARLSON, John, Peter**
**Dulles, VA 20166 (US)**
• **GRAVELY, Thomas, Booker**
**Herndon, VA 20170 (US)**
• **KENNEDY, Joseph, P., Jr.**
**Great Falls VA 22066 (US)**
• **MCDANIEL, James T., Jr.**
**Ashbourn, VA 20147 (US)**

(74) Representative: **Liesegang, Eva**
**Forrester & Boehmert**
**Pettenkoferstraße 20-22**
**80336 München (DE)**

(56) References cited:
**AU-B2- 740 903  US-A- 5 825 887**
**US-A- 5 901 358  US-A- 5 960 341**
**US-A- 6 047 192  US-B1- 6 246 884**
**US-B1- 6 246 884**

## Description

Priority Claim

This application claims priority from the following co-pending and commonly-assigned applications: U.S. provisional patent application serial number 60/384,836 entitled "A Method for CDMA Geolocation", filed 4 June 2002; and, U.S. utility patent application serial number 10/004,449 entitled "Pseudolite Positioning System and Method" filed 6 December 2001.

Background

To support FCC E911 rules to locate wireless 911 callers, as well as to support other location-enabled services, some providers of wireless communication services are installing mobile appliance location capabilities into their wireless networks. These wireless networks typically include at least one base station. One such type of mobile appliance location system is known in the art as a network overlay location system. Such systems typically, but not necessarily, include the addition of some software and/or hardware systems to the base stations of the wireless networks. In operation, these network overlay location systems may include one or more wireless location sensors ("WLS") which may take certain measurements of RF transmissions from a mobile appliance for which the geolocation is desired. The network overlay system may also include a geolocation control system (sometimes referred to as a geolocation control server) ("GCS") which may estimate the location of the mobile appliance based at least in part on the measurements obtained by the WLSs. The WLSs and/or the GCS may be co-located with the base station of the wireless network. Furthermore, the location of the mobile appliance may be determined with respect to one or more base stations. Since the geographic location of the base stations is typically known, the determination of the location of the mobile appliance with respect to the base station permits the geographic location of the mobile appliance to be determined. Similarly, if the geographic location of the WLS is known, then the location of the mobile appliance with respect to the WLS may be determined. The RF measurements of the transmitted signal at the WLS may include, but is not limited to, the time-of-arrival, time difference of arrival, angle of arrival, signal power, or unique/repeatable radio propagation path (radio fingerprinting) derivable features. In addition, some geolocation systems can also use collateral information, e.g., information other than that derived from the RF measurement to assist in the geolocation of the mobile appliance, i.e., location of roads, dead-reckoning, topography, map matching, etc.

As used herein, a mobile appliance may be, but is not limited to, any one or more of the following: laptop computer, mobile telephone, mobile radio, walkie-talkie, personal digital assistant, pager, personal tracking device, vehicle, automotive anti-theft device, telemetry device, fleet tracking device, anti-location fraud device, or any other similar device or system for which the geolocation of the device or system is desired.

In a network-based geolocation system, the mobile appliance to be located is typically identified and radio channel assignments determined by, for example, monitoring the control information transmitted on a radio channel for telephone calls being placed by the mobile appliance to detect calls of interest, e.g., 911 calls, or a location request provided by a non-mobile appliance source, i.e., an enhanced services provider. Once a mobile appliance to be located has been identified and radio channel assignments determined, the location determining system is tasked to determine the geolocation of the mobile appliance, and report the determined position to an appropriate entity, such as a mobile call center or enhanced services provider.

Some prior art systems are mobile appliance-based and determine the position of the mobile appliance by receiving multiple dedicated location signals either from components outside the mobile appliance's communication system, such as satellites and GPS systems or from a network of dedicated land-based antennas. Other prior art geolocation systems that are network overlay, or infrastructure-based, systems use combinations of specific, as opposed to ambiguous, measurements generally from multiple base stations, such as angle of arrival, time-of arrival, and time-difference-of-arrival. These specific measurement values are used to solve a set of mathematical equations to determine the location of the mobile appliance.

One prior art example of geolocation is based on time-difference-of-arrival ("TDOA") of radio signals at a plurality of base stations. One prior art TDOA system is described in U.S. Patent No. 5,327,144 to Stilp, et al. Another type of TDOA system is described in U.S. Patent No. 5,317,323 to Kennedy, et al. for which the present inventor is a co-inventor. TDOA systems, such as the two previously mentioned and others, measure the time-of-arrival at a single or multiple antennas at a plurality of base stations of a radio signal emitted by a transmitter. The time-of-arrival is used to define sets of hyperbolic surfaces which determine possible locations of the transmitter between each pair of base stations receiving the radio signal. The intersection of these hyperbolic surfaces defines the location of the transmitter. The underlying technique of TDOA systems relies on geometric equations and the constant speed of the radio signal.

US 6,246,884 B1 describes a communication system which comprises a reference base station and a number of auxiliary base stations. The reference base station collects one or more signal features of a mobile station signal and determines a first location parameter. The reference base station forwards the signal features to the auxiliary base stations. Using the signal features, the auxiliary base stations create a replica of the mobile station signal. The auxiliary base stations correlate the replica with a same mobile station signal as received at the auxiliary base stations in order to determine a second set of signal features. From the second set of signal features, a second location parameter is determined. The position of the mobile station is determined using the first and second location parameters. Similar prior art using replica correlation processing is described in US-A-6,047,192. Both systems operate based on unknown mobile station signals.

As mentioned above, the prior art systems rely on determining a channel assignment by monitoring the control information transmitted on a radio channel for telephone calls being placed by the mobile appliance to thereby detect calls of interest or a location request provided by a non-mobile appliance source, e. g., an enhanced services provider. In either case the identification of the mobile user and its channel assignment necessitate retrieval of information bits from the mobile appliance, through control signals or call setup information. However with the advent of the third generation CDMA specification known in the art as CDMA2000, a new system and method can be used to determine the location of a mobile appliance independent of the information data bits transmitted by the mobile appliance.

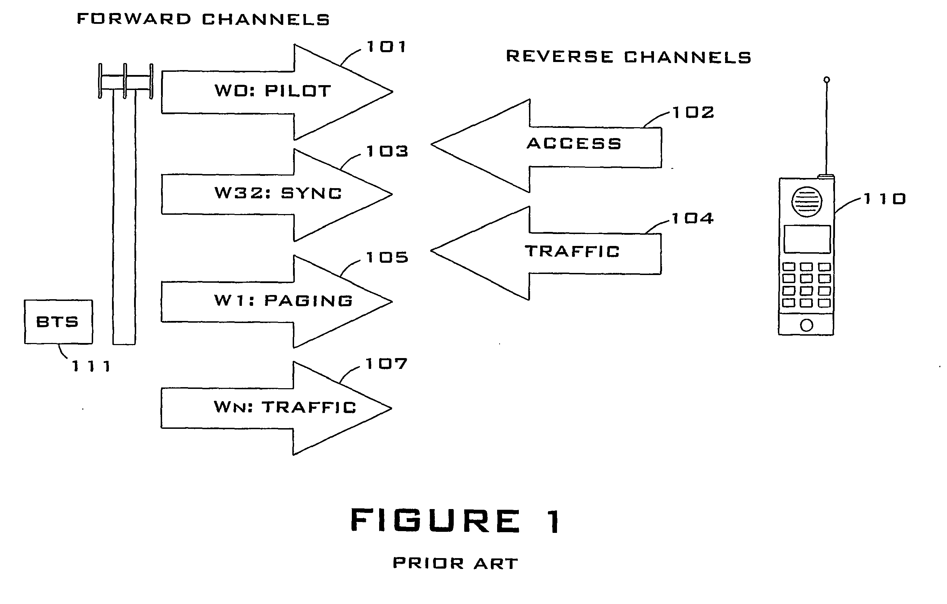

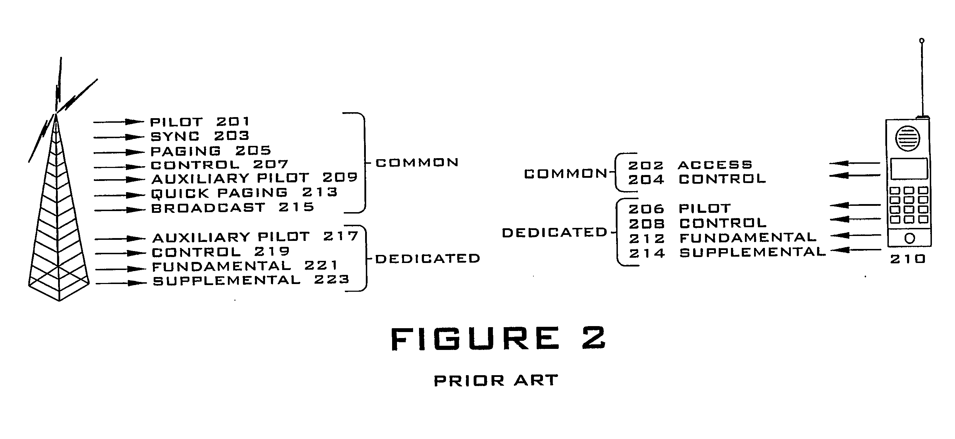

Idealized wireless systems operating under the IS-95 standard and the IS-2000 standard are shown pictorially in Figures 1 and 2, respectfully. The IS-95A/JStd-008 offers one physical structure using the forward channels, Pilot 101, Synchronization 103, Paging 105 and Traffic 107 from a base station 111; and reverse channels, Access 102 and Traffic 104 from the mobile appliance 110.

The IS-2000 standard in Figure 2 includes numerous common and dedicated channels in both the forward and reverse direction. The forward channels include Pilot 201, Sync 203, Paging 205, Control 207, Auxiliary Pilot 209, Quick Paging 213, and Broadcast 215 as common channels and Auxiliary Pilot 217, Control 219, Fundamental 221, and Supplemental 223 as dedicated channels from the base station 211. The reverse channels include Access 202 and Control 204 as common channels and Pilot 206, Control 208, Fundamental 212 and Supplemental 214 as dedicated channels from the mobile appliance 210.

In a system operating under the IS-95 standard, the forward link uses the pilot, paging, and sync control channels to maintain the link while the forward traffic channel is used for data and voice communication. On the reverse link, the mobile access channel is used to gain access to the system and the traffic channel is used for data and voice transfer.

In a system operating under the CDMA2000 IS-2000 standard, the IS-95 forward link channels are used in addition to a dedicated reverse pilot channel from the mobile appliance to the base station. The reverse pilot signal is unique for each mobile appliance and is typically a function of the Electronic Serial Number ("ESN"). The reverse pilot signal identifies the mobile appliance and typically incorporates a time reference so subsequent data sent by the mobile appliance can be very quickly decoded at the base station. The reverse pilot channel typically is used, for example, for coherent demodulation, multi-source combining, and identification of a mobile appliance. For IS-95 systems, a network overlay geolocation system for geolocating a mobile appliance typically entailed transferring a large amount of information through the geolocation system in order to geolocate a mobile appliance.

The ESN of a mobile appliance may typically be determined, as is known in the art, from the location requesting entity (which is separate from the wireless communication system), from control channels, from certain signaling present in the wired portion of the wireless communication system, or other such methods.

The details of the reverse pilot signal in a CDMA2000 wireless communication system are established by the Telecommunications Industry Association ("TIA"), as is known to those of skill in the art.

The existence of the reverse pilot channel in IS-2000 communication systems presents a new resource for efficiently geolocating a mobile appliance. Therefore, there is a need in view of the functionality afforded by the new CDMA2000 specifications to utilize the characteristics of the reverse pilot channel in creating a system and method for geolocating a mobile appliance operating in a wireless communication system under the CDMA2000 specifications. The present invention provides a method of determining the location of a first mobile appliance according to claim 1 and a location system according to claim 23.

In order to obviate the deficiencies in the prior art it is an object of the present disclosure to present an improved method of determining the location of a mobile appliance in a wireless communication system having plural receiver stations (e. g. , base stations) for communicating with the mobile appliance, including a reverse pilot signal transmitted by the mobile appliance to be used by the receiving stations to coherently demodulate the mobile appliance's transmissions. The improvement comprising determining the location of the mobile appliance based on the time difference of arrival of the reverse pilot signal at one or more geolocating receivers (e. g., WLS).

It is also an object of the present disclosure to present a novel method of geolocating a mobile appliance in a wireless communication system having plural receiver stations for communicating with at least one mobile appliance wherein the communication system has a reverse pilot channel used by the plural receiver stations for coherently demodulating transmissions from the mobile appliances operating in the system. The method for determining the location of a respective one of the mobile appliances (i. e., the target mobile) includes the step of determining the time difference of arrival of a reverse pilot signal transmitted by the target mobile and received on the reverse pilot channel at a plurality of WLS.

It is another object of the present disclosure to present a novel method for estimating the location of a mobile appliance in a wireless communication system having plural base stations for communication with the mobile appliance. The method includes providing a reverse pilot channel and transmitting from the mobile appliance a reverse pilot signal over the reverse pilot channel for reception at a plurality of WLS. A GCS is also provided and used for determining the time of arrival of the reverse pilot signal at the plurality of WLS. The GCS also determines a difference in time-of-arrival of the pilot channel at the plurality of WLS and estimates the geolocation of the mobile appliance therefrom.

It is still another object of the present disclosure to present a novel mobile appliance location determining system as a network overlay to a wireless communication system including one or more base stations. The communication system includes multiple mobile appliances each transmitting a unique non-traffic signal. The network overlay system includes plural WLSs, a plurality of which receive the non-traffic signal from the target mobile (i. e., the mobile appliance for which the geolocation is desired to be determined or estimated), and a geolocation processor (typically a GCS) in communication with the WLSs. The geolocation processor includes a reference signal generator for generating a reference signal, a cross- correlation device for determining time of arrival at a plurality of the WLSs of the non-traffic signal from the target mobile, and a location estimator for estimating the location of the mobile appliance based on the time of arrival of the non-traffic signal from the target mobile at the plurality of WLSs. The cross-correlation device may determine time of arrival based on a correlation of the non-traffic signal with the reference signal. Additionally, the WLSs need not be collocated with any of the base stations in the communication system.

It is yet another object of the present disclosure to present a novel method for determining the location of a target mobile appliance in a wireless communication system including one or more base stations wherein multiple WLSs are used to determine the location of the target mobile. The method includes transmitting from the target mobile a known spread spectrum sequence for establishing base station synchronization and receiving the sequence at a plurality of the WLSs. The method further includes correlating the received spread spectrum sequence with a reference sequence to determine the time of arrival at each of the plurality of WLSs, and estimating the location of the mobile appliance based on the time difference of arrival at of the spread spectrum sequence at the plurality of WLSs.

It is an additional object of the present disclosure to present a novel mobile appliance location determining system in a wireless communication system including one or more base stations and having one or more mobile appliances emitting a dedicated reverse pilot signal on a reverse pilot channel. The location determining system includes a plurality of WLS that receive the reverse pilot signal of the target mobile wherein each of the plurality of WLS is operatively connected to a geolocation processor in a GCS. The GCS includes a reference signal generator, a cross-correlation device, and a location estimator. The signal generator generates a reference signal based on the unique code mask of the target mobile, which is typically a function of the ESN of the target mobile. The cross-correlation device determines the time of arrival of the reverse pilot signal of the target mobile that is received over the reverse pilot channel at each of the plurality of WLSs by correlating the received reverse pilot signal with the reference signal. The location estimator estimates the location of the target mobile based on the time of arrival and/or the time difference of arrival between sets of WLSs.

It is yet an additional object of the present disclosure to locate a mobile appliance whether or not the mobile appliance is engaged is transmitting/receiving voice traffic signals, data traffic signals, or no traffic signals. In other words, the inventive system and method of the present disclosure is capable of locating a mobile appliance independent of the "state" or "mode" of the mobile appliance.

One purpose of this disclosure is the location of a mobile appliance in a wireless communication system for the purpose of satisfying FCC E911 guidelines as well as other location based service guidelines. The embodiments presented may also deal with the location of mobile appliances that either continuously or periodically transmit known spread spectrum sequences, independent of the information data bits (i.e., traffic signal) being transmitted to/between the mobile appliance and/or a base station.

These and many other objects and advantages of the present invention will be readily apparent to one skilled in the art to which the invention pertains from a perusal of the claims, the appended drawings, and the following detailed description of the preferred embodiments.

**BRIEF DESCRIPTION OF THE DRAWINGS**

Figure 1 is a representation of IS-95 CDMA channels.
Figure 2 is a representation of IS-2000 CDMA channels.
Figure 3 is a schematic representation of a prior art geolocation system integrated with communications infrastructure.
Figure 4 is a representative schematic of a geolocation overlay along with the overlaid communication infrastructure according to the present disclosure.
Figure 5 is a representative schematic of a geolocation overlay according to the present disclosure without an underlying communication infrastructure.
Figure 6 is a representative flow chart of a method for geolocation of a mobile appliance according to the present disclosure.

Figure 7 is a representative schematic for generating a reference signal according to the present disclosure.

## DETAILED DESCRIPTION

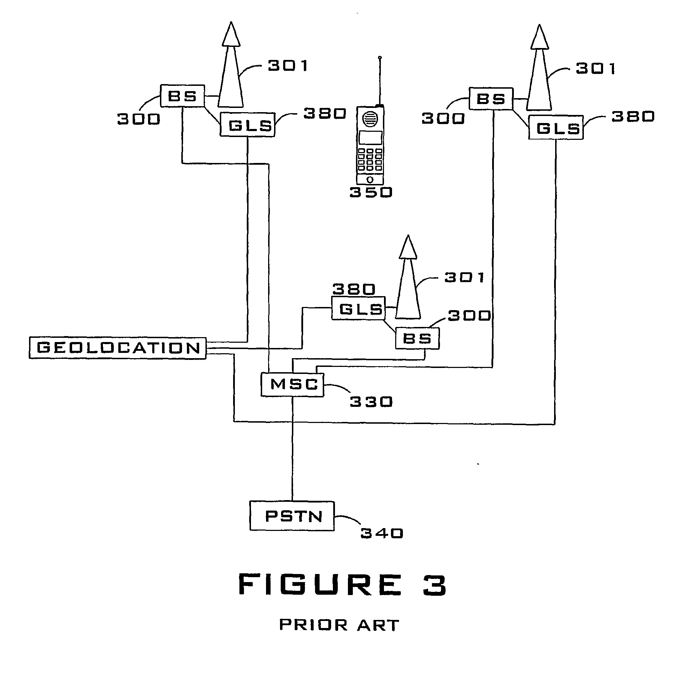

With reference to Figure 3, a typical prior art mobile communication system is depicted including three base stations 300 each with an associated antenna 301. The base stations are connected to a mobile switching center 330 which is an interface between the mobile communication system and the public switched telephone network ("PSTN") 340. The disclosed invention may operate in any mobile communication system with any number of base stations and is not limited to a system with three base stations. The antennas transmit signals to and receive signals from mobile appliances, such as the mobile appliance 350, wireless communication signals and pilot signals.

A typical geolocation subsystem ("GLS") 380 interfaces with a base station to retrieve the identity of the user derived from standard base station equipment and the assigned channels. Typical prior art geolocation subsystems use this information for estimating the position of a mobile appliance.

It should be noted, however, that the disclosed inventive system and method for locating a mobile appliance typically uses a network overlay such that one or more wireless location sensors (WLSs) receive a signal from the target mobile device (i.e., the mobile appliance for which the geolocation is to be determined) including a known sequence or sequences, and compute a location measurement based on an attribute of the target mobile's signal. Such an attribute may be, but is not limited to, time of arrival, angle of arrival, time difference of arrival, received power level, etc. The present inventive system and method is also equally operable with other such attributes of the target mobile's signal as are known in the art. The present inventive system and method can estimate the geolocation of the target mobile independent of current information supplied to the geolocation system by the wireless communication system to which the target mobile appliance communicates.

As an example, the time of arrival of the detected signal at one or more of the WLSs and the geolocation of the target mobile can be determined based on a priori information supplied to the network overlay geolocation system by the base station. It should also be noted that the present inventive system and method contemplates locating a mobile appliance that is "out of range" of a communication system to which the mobile appliance would normally be communicating.

Of particular interest is the ability to design a network overlay location system that can handle the highly complex signal structure of third generation CDMA communication system of IS-2000. In the CDMA2000 specification, as mentioned previously, there is a channel referred to as the "Reverse Pilot Channel" that is used by base stations in the communication system to coherently demodulate the mobile signal's transmissions. This reverse pilot channel is usually a signal comprised of an information bit sequence of zeros that has typically been quadrature scrambled by a pseudo-random sequence unique to each mobile appliance. This uniqueness is established by the fact that a specific 'long code mask' or "long spreading code" dictates the code phase state of a $2^{42}$-1 length binary sequence, which will be orthogonal or nearly orthogonal to all other mobile users sharing the same radio frequency channel resource. At the base stations, the signal is unscrambled by the unique long code state assigned to the specific user, and the "reverse pilot channel" can then be used as the transmitter carrier phase reference for coherent information bit demodulation.

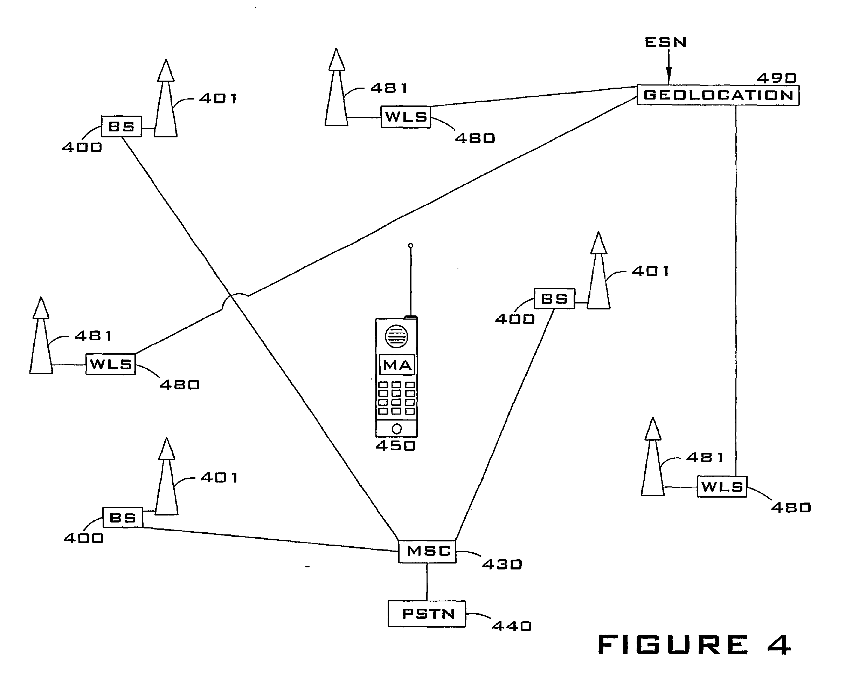

Figure 4 illustrates an embodiment of the present disclosure. A CDMA wireless communication system is shown with three base stations 400 and associated antenna 401. Each base station 400 is connected to a mobile switching center 430 which in turn is connected to a PSTN 440. The network overlay of the present disclosure comprises a plurality of wireless location sensors 480 with associated antenna 481 which are connected to a geolocation processor (or GCS) 490. As seen from the illustration in Figure 4 the network overlay can be independent of the infrastructure or the wireless communication system, since no current information that requires connection to the system is needed to geolocate the mobile appliance 450. A priori known information such as the ESN for the mobile appliances of interest are known by the system. Integration into the base station infrastructure is however not precluded for other practical purposes. It is envisioned that the WLS and associated antennas may be at different locations as shown in Figure 4 or co-located with the base stations utilizing common towers or other shared components.

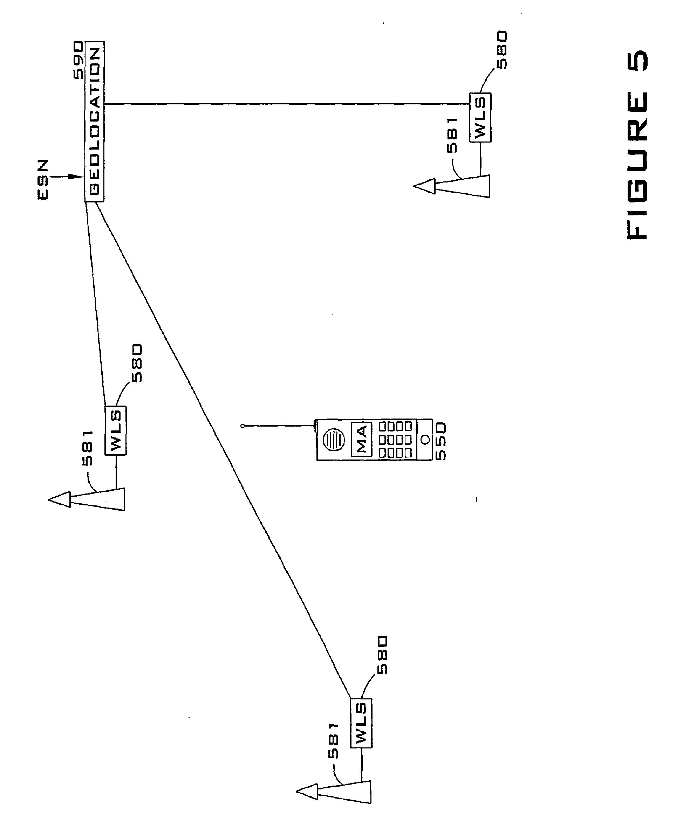

Figure 5 illustrates an embodiment of the geolocation system in isolation from the CDMA wireless communication system infrastructure. The overlay shown is the same as shown in Figure 4 with like components identified by like numbers. The WLS 580 and associated antennae 581 are operationally connected to the geolocation processor 590 which uses the time difference of arrival of the reverse pilot signal at the WLSs to locate the mobile appliance 550. The overlay as disclose can thus facilitate geolocation in areas in which CDMA communication facilities (base stations, mobile switching center, etc) do not presently exist, because as mentioned above the overlay may operate independently of the base stations. This independent mode of operation is enabled wherever the reverse pilot signal for the mobile appliance of interest is being transmitted. An interface to an enhanced services provider or emergency services provider enables location information to be requested for these services.

The present disclosure exploits the fact that the known sequence, the reverse pilot channel, exists and is unique to each mobile appliance. The geolocation system attempts to detect the presence of this pilot signal, and measures its time of arrival at one or more WLSs which may or may not be collocated with the base stations.

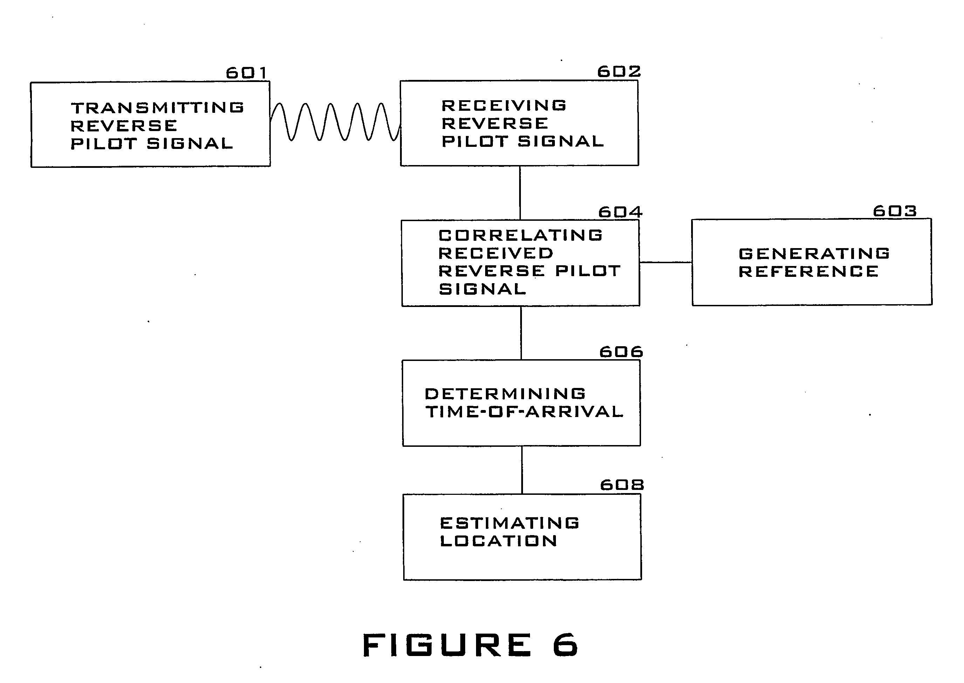

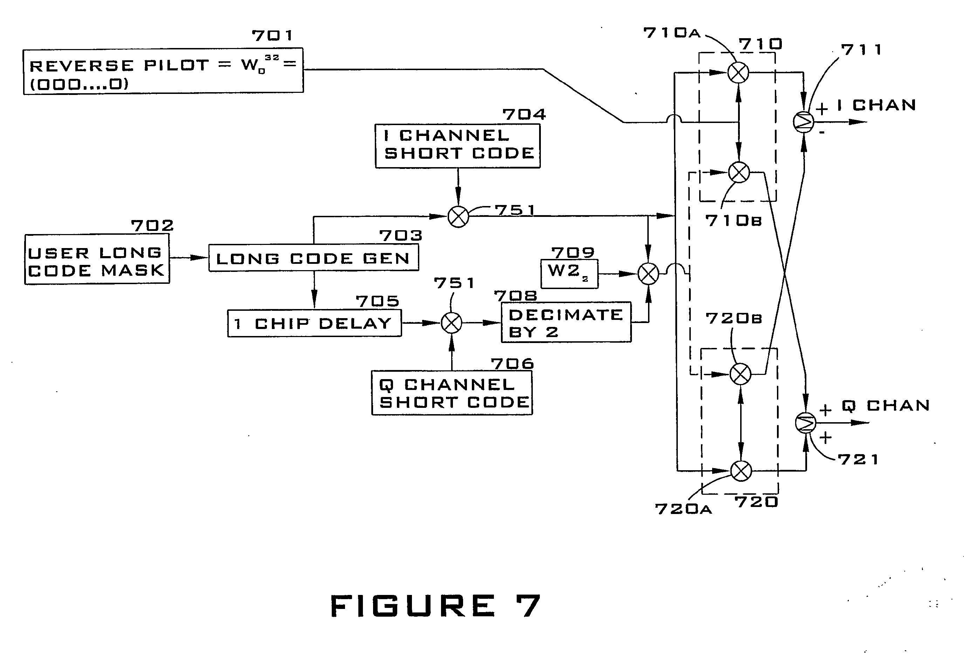

Figure 6 is a flow chart of an exemplary method for determining the location of a mobile appliance using a reverse pilot channel. The mobile appliance transmits a reverse pilot signal over a reverse pilot channel as indicated in block 601. The reverse pilot signal can be in accordance with IS2000 as discussed above or may be any other type of coded signal which represents a unique signature that can be discerned independent of traffic signals, wherein "traffic signals" represent those signals in which, for instance, voice information is transferred. The reverse pilot signal is received at one or more WLS in block 602. The reverse pilot channels are monitored by the WLS. The received reverse pilot signal is correlated with a reference signal in block 604, typically at a GCS. The reference signal is generated, typically at a GCS, by using the unique PN code of the target mobile appliance and may be generated in much the same manner as the pilot signal is generated by the target mobile. The methodology and apparatus for creating the reference signal in block 603 is described in more detail in Figure 7. The correlation provides a series of correlation values which if above a threshold indicates detection of the target mobile's reverse pilot signal. The peak correlation value may be used in block 606 to determine the time of arrival of the reverse pilot signal at the respective WLS. Each of the WLS is synchronized within the system and as such a time difference of arrival may be determined in block 608 for each of the respective WLS. An estimate of the location of the target mobile is generated in block 608 at the GCS based on the intersection of possible location hyperbolas generated from the TDOA at the WLS by methods that are well known in the art.

Detection of the reverse pilot signal can be accomplished by complex correlating the received signal with an internally generated reference signal of the pilot signal that has been complex scramble by the target mobile's unique long code sequence. The location of the peak of the correlation dictates the time of arrival of the signal at each receiver site. As is known in the art, complex correlation, correlation and cross-correlation all generally refer to processes in the time domain. A preferred approach to detection is to process the reverse pilot signal using an ambiguity function which jointly operates in the time and frequency domains. This approach allows detection and time of arrival estimation in the presence of a frequency difference between the reverse pilot signal and the reference which can occur due to Doppler effects and differences in local frequency references. From these multiple times of arrival, a geolocation can be performed using one of many widely known time difference of arrival estimation methods. Figure 7 illustrates a method which may be used to generate a reference signal with which to estimate the geolocation of a target mobile.

This reference signal may then be correlated with the received reverse pilot signal in order to detect the time of arrival of the reverse pilot signal from the target mobile as discussed above.

Figure 7 is a schematic for the generation of a reference signal for detecting the reverse pilot signal from the target mobile appliance. As noted previously, the reverse pilot typically a Walsh code of all zeros $W_0^{32}$ as shown in block 701. The unique long code mask 702 dedicated to a specific mobile appliance is used to generate a long code 703. The long spreading code mask typically is a function of the ESN of the mobile appliance. The long code is mixed with an I channel short code 704 by mixer 751 forming a first code to be mixed downstream with other signals. The long code is also delayed or phase shifted in block 705 and mixed by mixer 752 with a Q channel short code 705, the result being decimated by 2 in block 708 and along with the resultant I mixed by mixer 753 with a Walsh code $W2_2$ (01) 709 to create a second code. The first and second codes are applied to mixer pairs 710 and 720 to be mixed with the $W_0^{32}$ Walsh code 701 of the pilot signal. The mixer pairs 710 and 720 each mix the first code and the second code with the Walsh code in mixers 710a, 720a and 710b, 720b respectively The mixer pairs are cross summed in summers 711 and 721 to produce the I channel and Q channel reference signal by which the target mobile's reverse pilot signal can be detected.

Since wideband CDMA ("WCDMA") is derived from a similar specification basis, it has the same provisions as IS2000 for channel estimation at the base station. WCDMA is the air interface standard selected for most of the Universal Mobile Telecommunication System ("UMTS") deployments in Europe and Asia, and is in serious consideration in parts of North and South America. As is known to those of skill in the art, the WCDMA communication system details are established by the Third Generation Partnership Project ("3GPP").

WCDMA features a reverse pilot on the Uplink Dedicated Channel in the Dedicated Physical Control Channel ("DPCCH"). WCDMA is an asynchronous system dependent on downlink synchronization channels to align the timing between all base stations and the mobile appliance, The DPCCH is transmitted continuously at a fixed spreading factor, making it always available to the base station radio for channel estimation

**Claims**

1.   A method of determining the location of a first mobile appliance (450) which emits a reverse pilot signal in a reverse pilot channel in accordance with IS 2000 CDMA standard or on the Uplink Dedicated Channel in the Dedicated Physical Control Channel (DPCCH) of wideband CDMA (WCDMA) that is different from reverse pilot signals emitted by other mobile appliances, comprising the steps of:

    (a) receiving at a plurality of wireless location sensors (480) said reverse pilot signal emitted from said first mobile appliance (450);
    (b) determining an attribute of said reverse pilot signal emitted by said first mobile appliance (450) at each of said plurality of wireless location sensors; and
    (c) determining the location of said first mobile appliance (450) as a function of said attribute determined at each of said plurality of wireless location sensors

wherein said first mobile appliance reverse pilot signal is quadrature scrambled by a unique pseudo-random sequence that is a function of the Electronic Serial Number (ESN) of said first mobile appliance.

2. The method of Claim 1 wherein said first mobile appliance (450) is operating in a wireless communication system having at least one base station for communicating with said mobile appliance.

3. The method of Claim 1 or 2 wherein said attribute is selected from the group consisting of time of arrival, angle of arrival, and received power level.

4. The method of Claim 1 or 2 wherein said attribute is time difference of arrival.

5. The method of Claim 4 wherein the step of determining the time difference of arrival includes correlating said pilot signal with a reference signal.

6. The method of Claim 4 wherein the step of determining the time difference of arrival includes ambiguity function processing of said reverse pilot signal with a reference signal.

7. The method of Claim 2 wherein said wireless location sensor is geographically spaced apart from said at least one base station.

8. The method of Claim 2 wherein said reverse pilot signal emitted from said first mobile appliance is used by said at least one base station to coherently demodulate a traffic signal emitted by said first mobile appliance.

9. The method of claim 1 wherein said reverse pilot signal emitted from said first mobile appliance is generated as a function of a long spreading code for said first mobile appliance.

10. The method of one of the preceding Claims wherein the location of the first mobile appliance is determined independent of said first mobile appliance transmitting or receiving voice traffic signals, data traffic signals or no traffic signals.

11. The method of one of the preceding Claims, comprising the steps of:

    (a) providing a reverse pilot channel; and
    (b) transmitting from said first mobile appliance said reverse pilot signal over said reverse pilot channel wherein said reverse pilot signal is different from reverse pilot signals emitted by other mobile appliances.

12. The method of Claim 11 wherein said first mobile appliance reverse pilot signal is a digital signal generated from an information bit data sequence of zeros.

13. The method of Claim 11 wherein the reverse pilot signal of each mobile appliance is a pseudo-random sequence that is substantially orthogonal to the pseudo-random sequence generated by each of the other mobile appliances.

14. The method of Claim 11 including the further steps of:

    (c)(i) providing a reference signal at said wireless location sensor; and
    (c)(ii) detecting the presence of the first mobile appliance reverse pilot signal by cross-correlating in the time domain the received reverse pilot signal with said reference signal.

15. The method of Claim 14 wherein step (c)(ii) includes cross-correlating in the time domain and the frequency domain the received reverse pilot signal with said reference signal.

16. The method of Claim 14 wherein step (c)(ii) includes ambiguity function processing jointly in the time domain and the frequency domain the received reverse pilot signal with said reference signal.

17. The method of Claim 14 wherein step (c)(i) comprises the steps of:

    (c)(i)(A) generating a sequence of zeros;
    (c)(i)(B) generating a long spreading code using the long code mask of said first mobile appliance; and
    (c)(i)(C) applying said long spreading code to an I channel short code and applying said long spreading code to a Q channel short code.

18. The method of claim 1, wherein each wireless location sensor is located at a respective geolocation receiver, and wherein

said reverse pilot signal comprises a known spread spectrum sequence for establishing synchronization between said mobile appliance and said at least one base station, and further comprising the step of:

> cross-correlating in the time domain and the frequency domain the received sequence with a reference sequence to thereby determine said attribute of the reverse pilot signal at said several ones of said plural geolocation receiver site.

**19.** The method of Claim 18 wherein one of said plural geolocation receiver sites is geographically spaced apart from any of said at least one base station.

**20.** The method of Claim 18 or 19, wherein said spread spectrum sequence is transmitted continuously.

**21.** The method of one of Claims 18 - 20 wherein the location of the first mobile appliance is determined independent of said first mobile appliance transmitting or receiving voice traffic signals, data traffic signals or no traffic signals.

**22.** The method of claim 18 wherein the step of cross-correlating in the time domain and the frequency domain is replaced by ambiguity function processing jointly in the time domain and the frequency domain.

**23.** A location system for estimating the location of a first mobile appliance, comprising:

> said first mobile appliance including means for emitting a reverse pilot signal in a reverse pilot channel in accordance with IS 2000 CDMA standard or on the Uplink Dedicated Channel in the Dedicated Physical Control Channel (DPCCH) of wideband CDMA (WCDMA) different from reverse pilot signals emitted by other mobile appliances;
> a plurality of wireless location sensors, each including means for receiving said first mobile appliance reverse pilot signal; and
> a geolocation control server operatively connected to said plurality of wireless location sensors for determining an attribute, at each of the plurality of wireless location sensors, of said received reverse pilot signal and estimating the location of said first mobile appliance as a function of said attribute

> wherein said first mobile appliance reverse pilot signal is quadrature scrambled by a unique pseudorandom sequence that is a function of the Electronic Serial Number (ESN) of said first mobile appliance.

**24.** The system of Claim 23 wherein said attribute is selected from the group consisting of: time of arrival, angle of arrival and received power level.

**25.** The system of Claim 23 or 24 wherein said first mobile appliance is operating in a wireless communication system having at least one base station for communicating with said mobile appliance.

**26.** The system of claim 23 wherein said attribute is time difference of arrival.

**27.** The system of Claim 26 wherein the step of determining the time difference of arrival includes correlating said reverse pilot signal with a reference signal.

**28.** The system of Claim 26 wherein the step of determining the time difference of arrival includes ambiguity function processing of said reverse pilot signal with a reference signal.

**29.** The system of Claim 25 wherein said wireless location sensor is geographically spaced apart from said at least one base station.

**30.** The system of Claim 25 wherein said reverse pilot signal emitted from said first mobile appliance is used by said at least one base station to coherently demodulate a traffic signal emitted by said first mobile appliance.

**31.** The system of Claim 25 wherein said location system is a network overlay location system.

**32.** The system of claim 23 wherein said reverse pilot signal emitted from said first mobile appliance is generated as a function of a long spreading code for said first mobile appliance.

**33.** The system of one of Claims 23 - 32 wherein said geolocation control server includes:

> a reference signal generator for generating a reference signal;
> a cross-correlation or ambiguity function device for determining said attribute of said received reverse pilot signal; and
> a location estimator for estimating the location of said first mobile appliance as a function of said attribute.

**34.** The system of Claim 33 wherein said cross-correlation or ambiguity function device determines the time difference of arrival of said received reverse pilot signal for at least two of said wireless location sensors and wherein said location estimator estimates the location of said first mobile appliance as a function of said time difference of arrival.

**35.** The system of one of Claims 23 - 34 wherein the location of the first mobile appliance is determined independent of the state of said first mobile appliance.

**Patentansprüche**

**1.** Verfahren zum Bestimmen des Standortes eines ersten beweglichen Gerätes (450), welches ein Rückwärtspilotsignal auf einem Rückwärtspilotkanal entsprechend dem IS-2000-CDMA-Standard oder auf dem der Aufwärtsstrecke gewidmeten Kanal (Uplink Dedicated Channel) auf dem dedizierten physikalischen Steuerungskanal (Dedicated Physical Control Channel, DPCCH) des Breitband-CDMA (wideband CDMA, WCDMA) aussendet, welches verschieden ist von Rückwärtspilotsignalen, die durch andere bewegliche Geräte ausgesendet werden, wobei das Verfahren die folgenden Schritte umfasst:

> (a) Empfangen des Rückwärtspilotsignals, das von dem ersten beweglichen Gerät (450) ausgesendet wird, an mehreren kabellosen Standortsensoren (480);
> (b) Bestimmen eines Merkmals des Rückwärtspilotsignals, das durch das erste bewegliche Gerät (450) ausgesendet wird, an jedem der mehreren kabellosen Standortfühlern; und
> (c) Bestimmen des Standortes des ersten beweglichen Gerätes (450) als eine Funktion des Merkmals, welches an jedem der mehreren kabellosen Standortsensoren bestimmt wurde,

wobei das Rückwärtspilotsignal des ersten beweglichen Gerätes durch eine eindeutige Pseudo-Zufallsfolge quadraturverschlüsselt ist, welche eine Funktion der elektronischen Seriennummer (Electronic Serial Number, ESN) des ersten beweglichen Gerätes ist.

**2.** Verfahren nach Anspruch 1, wobei das erste bewegliche Gerät (450) in einem drahtlosen Kommunikationssystem arbeitet, welches zumindest eine Basisstation zum Kommunizieren mit dem beweglichen Gerät aufweist.

**3.** Verfahren nach Anspruch 1 oder 2, wobei das Merkmal aus der Gruppe ausgewählt ist, welche aus einer Ankunftszeit, einem Ankunftswinkel und einem Empfangsleistungspegel besteht.

**4.** Verfahren nach Anspruch 1 oder 2, wobei das Merkmal ein Ankunftszeitunterschied ist.

**5.** Verfahren nach Anspruch 4, wobei der Schritt des Bestimmens des Ankunftszeitunterschieds ein Korrelieren des Pilotsignals mit einem Referenzsignal aufweist.

**6.** Verfahren nach Anspruch 4, wobei der Schritt des Bestimmens des Ankunftszeitunterschieds ein Mehrdeutigkeitsfunktionsverarbeiten des Rückwärtspilotsignals mit einem Referenzsignal aufweist.

**7.** Verfahren nach Anspruch 2, wobei der drahtlose Standortsensor geographisch von der zumindest einen Basisstation beabstandet ist.

**8.** Verfahren nach Anspruch 2, wobei das Rückwärtspilotsignal, das von dem ersten beweglichen Gerät ausgesendet wird, von der zumindest eine Basisstation verwendet wird, um ein Verkehrssignal kohärent zu demodulieren, welches von dem ersten beweglichen Gerät ausgesendet wird.

**9.** Verfahren nach Anspruch 1, wobei das Rückwärtspilotsignal, das von dem ersten beweglichen Gerät ausgesendet wird, als eine Funktion eines Langspreizcodes für das erste bewegliche Gerät erzeugt wird.

**10.** Verfahren nach einem der vorangehenden Ansprüche, wobei der Standort des ersten beweglichen Gerätes unabhängig davon bestimmt wird, ob das erste bewegliche Gerät Sprachverkehrssignale, Datenverkehrssignale oder keine Verkehrssignale überträgt oder empfängt.

**11.** Verfahren nach einem der vorangehenden Ansprüche, welches die folgenden Schritte umfasst:

> (a) Bereitstellen eines Rückwärtspilotkanals; und
> (b) Übertragen des Rückwärtspilotsignals von dem ersten beweglichen Gerät über den Rückwärtspilotkanal, wobei das Rückwärtspilotsignal verschieden von den Rückwärtspilotsignalen ist, die durch andere bewegliche Geräte ausgesendet werden.

**12.** Verfahren nach Anspruch 11, wobei das Rückwärtspilotsignal des ersten beweglichen Gerätes ein digitales Signal ist, welches von einer Informationsbitdatenfolge von Nullen erzeugt wird.

**13.** Verfahren nach Anspruch 11, wobei das Rückwärtspilotsignal jedes beweglichen Gerätes eine Pseudo-Zufallsfolge ist, welche im Wesentlichen orthogonal zu der Pseudo-Zufallsfolge ist, die von jedem der anderen beweglichen Geräte erzeugt wird.

**14.** Verfahren nach Anspruch 11, welches die folgenden weiteren Schritte aufweist:

(c)(i) Bereitstellen eines Referenzsignals bei dem drahtlosen Standortsensor; und
(c)(ii) Erfassen der Anwesenheit des Rückwärtspilotsignals des ersten beweglichen Gerätes durch ein Kreuzkorrelieren des empfangenen Rückwärtspilotsignals mit dem Referenzsignal in der Zeitdomäne.

15. Verfahren nach Anspruch 14, wobei der Schritt (c)(ii) ein Kreuzkorrelieren des empfangenen Rückwärtspilotsignals mit dem Referenzsignal in der Zeitdomäne und der Frequenzdomäne aufweist.

16. Verfahren nach Anspruch 14, wobei der Schritt (c)(ii) ein Mehrdeutigkeitsfunktionsverarbeiten des empfangenen Rückwärtspilotsignals mit dem Referenzsignal gemeinsam in der Zeitdomäne und der Frequenzdomäne aufweist.

17. Verfahren nach Anspruch 14, wobei der Schritt (c)(i) die folgenden Schritte umfasst:

(c)(i)(A) Erzeugen einer Folge von Nullen;
(c)(i)(B) Erzeugen eines Langspreizcodes, wobei die Langcodemaske des ersten beweglichen Geräts verwendet wird; und
(c)(i)(C) Anwenden des Langspreizcodes auf einen I-Kanal-Kurzcode und Anwenden des Langspreizcodes auf einen Q-Kanal-Kurzcode.

18. Verfahren nach Anspruch 1, wobei jeder drahtlose Standortsensor bei einem jeweiligen Empfänger zur geographischen Lokalisierung positioniert ist, und wobei das Rückwärtspilotsignal eine bekannte Spreizspektrumfolge zum Herstellen einer Synchronisierung zwischen dem beweglichen Gerät und der zumindest einen Basisstation umfasst, und weiter den folgenden Schritt umfasst:

Kreuzkorrelieren der empfangenen Folge mit einer Referenzfolge in der Zeitdomäne und der Frequenzdomäne, um **dadurch** das Merkmal des Rückwärtspilotsignals bei den einigen der mehreren Orte der Empfänger zur geographischen Lokalisierung zu bestimmen.

19. Verfahren nach Anspruch 18, wobei einer der Orte der Empfänger zur geographischen Lokalisierung geographisch von einer der zumindest einen Basisstation beabstandet ist.

20. Verfahren nach Anspruch 18 oder 19, wobei die Spreizspektrumsfolge kontinuierlich übertragen wird.

21. Verfahren nach einem der Ansprüche 18 bis 20, wobei der Standort des ersten beweglichen Gerätes unabhängig davon bestimmt wird, ob das erste bewegliche Gerät Sprachverkehrssignale, Datenverkehrssignale oder keine Verkehrssignale überträgt oder empfängt.

22. Verfahren nach Anspruch 18, wobei der Schritt des Kreuzkorrelierens in der Zeitdomäne und der Frequenzdomäne durch ein Mehrdeutigkeitsfunktionsverarbeiten gemeinsam in der Zeitdomäne und der Frequenzdomäne ersetzt ist.

23. Standortsystem zum Schätzen des Standortes eines ersten beweglichen Gerätes, wobei das System Folgendes umfasst:

das erste bewegliche Gerät, welches Mittel zum Senden eines Rückwärtspilotsignals auf einem Rückwärtspilotkanal entsprechend dem IS-2000-CDMA-Standard oder auf dem der Aufwärtsstrecke gewidmeten Kanal (Uplink Dedicated Channel) auf dem dedizierten physikalischen Steuerungskanal (Dedicated Physical Control Channel, DPCCH) des Breitband-CDMA (wideband CDMA, WCDMA) aufweist, welches verschieden ist von Rückwärtspilotsignalen, welche durch andere bewegliche Geräte ausgesendet werden;
mehrere drahtlose Standortsensoren, wovon jeder ein Mittel zum Empfangen des Rückwärtspilotsignals des ersten beweglichen Gerätes aufweist; und
einen Steuerserver zur geographischen Lokalisierung, welcher wirksam mit den mehreren drahtlosen Standortsensoren verbunden ist, um ein Merkmal des empfangenen Rückwärtspilotsignals an jedem der mehreren drahtlosen Standortsensoren zu bestimmen und den Standort des ersten beweglichen Gerätes als eine Funktion des Merkmals zu schätzen,

wobei das Rückwärtspilotsignal des ersten beweglichen Gerätes durch eine eindeutige Pseudo-Zufallsfolge quadraturverschlüsselt ist, welche eine Funktion der elektronischen Seriennummer (Electronic Serial Number, ESN) des ersten beweglichen Gerätes ist.

24. System nach Anspruch 23, wobei das Merkmal aus der Gruppe ausgewählt ist, welche aus einer Ankunftszeit, einem Ankunftswinkel und einem Empfangsleistungspegel besteht.

25. System nach Anspruch 23 oder 24, wobei das erste bewegliche Gerät in einem drahtlosen Kommunikationssystem arbeitet, welches zumindest eine Basisstation zum Kommunizieren mit dem beweglichen Gerät aufweist.

**26.** System nach Anspruch 23, wobei das Merkmal ein Ankunftszeitunterschied ist.

**27.** System nach Anspruch 26, wobei der Schritt des Bestimmens des Ankunftszeitunterschieds ein Korrelieren des Rückwärtspilotsignals mit einem Referenzsignal aufweist.

**28.** System nach Anspruch 26, wobei der Schritt des Bestimmens des Ankunftszeitunterschieds ein Mehrdeutigkeitsfunktionsverarbeiten des Rückwärtspilotsignals mit einem Referenzsignal aufweist.

**29.** System nach Anspruch 25, wobei der drahtlose Standortsensor geographisch von der zumindest einen Basisstation beabstandet ist.

**30.** System nach Anspruch 25, wobei das Rückwärtspilotsignal, welches von dem ersten beweglichen Gerät ausgesendet wird, von der zumindest eine Basisstation verwendet wird, um ein Verkehrssignal kohärent zu demodulieren, welches von dem ersten beweglichen Gerät ausgesendet wird.

**31.** System nach Anspruch 25, wobei das Standortsystem ein Netzwerküberlagerungsstandortsystem ist.

**32.** System nach Anspruch 23, wobei das Rückwärtspilotsignal, welches von dem ersten beweglichen Gerät ausgesendet wird, als eine Funktion eines Langspreizcodes für das erste bewegliche Gerät erzeugt wird.

**33.** System nach einem der Ansprüche 23 bis 32, wobei der Steuerungsserver zur geographischen Lokalisierung Folgendes aufweist:

einen Referenzsignalerzeuger zum Erzeugen eines Referenzsignals;
eine Kreuzkorrelations- oder Mehrdeutigkeitsfunktionsvorrichtung zum Bestimmen des Merkmals des empfangenen Rückwärtspilotsignals; und
einen Standortschätzer zum Schätzen des Standortes des ersten beweglichen Geräts als eine Funktion des Merkmals.

**34.** System nach Anspruch 33, wobei die Kreuzkorrelations- oder Mehrdeutigkeitsfunktionsvorrichtung den Ankunftszeitunterschied des empfangenen Rückwärtspilotsignals für zumindest zwei der drahtlosen Standortsensor bestimmt, und wobei der Standortschätzer den Standort des ersten beweglichen Gerätes als eine Funktion des Ankunftszeitunterschieds schätzt.

**35.** System nach einem der Ansprüche 23 bis 34, wobei der Standort des ersten beweglichen Gerätes unabhängig von dem Zustand des ersten beweglichen Gerätes bestimmt wird.

## Revendications

**1.** Procédé de détermination de la position d'un premier dispositif mobile (450) qui émet un signal pilote inverse dans un canal pilote inverse conformément à la norme CDMA IS 2000 ou sur le Canal Dédié en Liaison Montante dans le Canal de Commande Physique Dédié (DPCCH) d'un système CDMA à large bande (WCDMA) qui est différent des signaux pilotes inverses émis par d'autres dispositifs mobiles, comprenant les étapes suivantes :

(a) recevoir, au niveau d'une pluralité de détecteurs de position sans fil (480), le signal pilote inverse émis par le premier dispositif mobile (450) ;
(b) déterminer un attribut du signal pilote inverse émis par le premier dispositif mobile (450) au niveau de chacun de la pluralité de capteurs de position sans fil ; et
(c) déterminer l'emplacement du premier dispositif mobile (450) en fonction de l'attribut déterminé au niveau de chacun de la pluralité de capteurs de position sans fil

dans lequel le signal pilote inverse du premier dispositif mobile est brouillé en quadrature par une séquence pseudo-aléatoire unique qui est fonction du Numéro de Série Électronique (ESN) du premier dispositif mobile.

**2.** Procédé selon la revendication 1, dans lequel le premier dispositif mobile (450) fonctionne dans un système de communication sans fil comportant au moins une station de base pour communiquer avec le dispositif mobile.

**3.** Procédé selon la revendication 1 ou 2, dans lequel ledit attribut est sélectionné dans le groupe constitué d'un instant d'arrivée, un angle d'arrivée, et un niveau de puissance reçu.

**4.** Procédé selon la revendication 1 ou 2, dans lequel l'attribut est une différence d'instants d'arrivée.

**5.** Procédé selon la revendication 4, dans lequel l'étape de détermination de la différence d'instants d'arrivée comprend la corrélation du signal pilote avec un signal de référence.

**6.** Procédé selon la revendication 4, dans lequel l'étape de détermination de la différence d'instants d'arrivée comprend un traitement de fonction d'ambiguïté du signal pilote inverse avec un signal de référence.

**7.** Procédé selon la revendication 2, dans lequel le capteur de position sans fil est éloigné géographiquement de ladite au moins une station de base.

**8.** Procédé selon la revendication 2, dans lequel le signal pilote inverse émis par le premier dispositif mobile est utilisé par ladite au moins une station de base pour une démodulation cohérente d'un signal de communication émis par le premier dispositif mobile.

**9.** Procédé selon la revendication 1, dans lequel le signal pilote inverse émis par le premier dispositif mobile est généré en fonction d'un code d'étalement long pour le premier dispositif mobile.

**10.** Procédé selon l'une quelconque des revendications précédentes, dans lequel la position du premier dispositif mobile est déterminée indépendamment du fait que le premier dispositif mobile émette ou reçoive des signaux de communications vocales, des signaux de communication de données ou aucun signal de communication.

**11.** Procédé selon l'une quelconque des revendications précédentes, comprenant les étapes suivantes :

> (a) fournir un canal pilote inverse ; et
> (b) émettre à partir du premier dispositif mobile le signal pilote inverse sur le canal pilote inverse, le signal pilote inverse étant différent des signaux pilotes inverses émis par d'autres dispositifs mobiles.

**12.** Procédé selon la revendication 11, dans lequel le signal pilote inverse du premier dispositif mobile est un signal numérique généré à partir d'une séquence de données de bits d'informations constituée de zéros.

**13.** Procédé selon la revendication 11, dans lequel le signal pilote inverse de chaque dispositif mobile est une séquence pseudo-aléatoire qui est sensiblement orthogonale à la séquence pseudo-aléatoire générée par chacun des autres dispositifs mobiles.

**14.** Procédé selon la revendication 11, comprenant en outre les étapes suivantes :

> (c)(i) fournir un signal de référence au capteur de position sans fil ; et
> (c)(ii) détecter la présence du signal pilote inverse du premier dispositif mobile en effectuant une inter-corrélation dans le domaine temporel du signal pilote inverse reçu avec le signal de référence.

**15.** Procédé selon la revendication 14, dans lequel l'étape (c)(ii) comprend une inter-corrélation dans le domaine temporel et dans le domaine fréquentiel du signal pilote inverse reçu avec le signal de référence.

**16.** Procédé selon la revendication 14, dans lequel l'étape (c)(ii) comprend un traitement de fonction d'ambiguïté de façon conjointe dans le domaine temporel et le domaine fréquentiel du signal pilote inverse reçu avec le signal de référence.

**17.** Procédé selon la revendication 14, dans lequel l'étape (c)(i) comprend les étapes suivantes :

> (c)(i)(A) générer une séquence de zéros ;
> (c)(i)(B) générer un code d'étalement long en utilisant le masque de code long du premier dispositif mobile ; et
> (c)(i)(C) appliquer le code d'étalement long à un code court de canal I et appliquer le code d'étalement long à un code court de canal Q.

**18.** Procédé selon la revendication 1, dans lequel chaque capteur de position sans fil est situé au niveau d'un récepteur de géo-localisation respectif, et dans lequel
le signal pilote inverse comprend une séquence à étalement de spectre connue pour établir une synchronisation entre le dispositif mobile et ladite au moins une station de base, et comprenant en outre l'étape suivante :

> faire une inter-corrélation dans le domaine temporel et le domaine fréquentiel de la séquence reçue avec une séquence de référence pour déterminer ainsi l'attribut du signal pilote inverse au niveau de plusieurs de la pluralité de sites récepteurs de géo-localisation.

**19.** Procédé selon la revendication 18, dans lequel l'un de la pluralité de sites récepteurs de géo-localisation est éloigné géographiquement de chacune desdites au moins une station de base.

**20.** Procédé selon la revendication 18 ou 19, dans lequel la séquence à étalement de spectre est transmise en continu.

**21.** Procédé selon l'une quelconque des revendications 18 à 20, dans lequel la position du premier dispositif mobile est déterminée indépendamment du fait que le premier dispositif mobile émette ou reçoive des signaux de communications vocales, des signaux de communication de données ou aucun signal de communication.

**22.** Procédé selon la revendication 18, dans lequel l'étape d'inter-corrélation dans le domaine temporel et le domaine fréquentiel est remplacée par un traitement de fonction d'ambiguïté conjointement dans le do-

maine temporel et le domaine fréquentiel.

**23.** Système de détermination de position pour estimer la position d'un premier dispositif mobile, comprenant :

le premier dispositif mobile comprenant des moyens d'émission d'un signal pilote inverse dans un canal pilote inverse conformément à la norme CDMA IS 2000 ou sur le Canal Dédié en Liaison Montante dans le Canal de Commande Physique Dédié (DPCCH) d'un système CDMA à large bande (WCDMA) différent des signaux pilotes inverses émis par d'autres dispositifs mobiles ;
une pluralité de capteurs de position sans fil, chacun comprenant des moyens de réception du signal pilote inverse du premier dispositif mobile ; et
un serveur de commande de géo-localisation connecté fonctionnellement à la pluralité de capteurs de position sans fil pour déterminer un attribut, au niveau de chacun de la pluralité de capteurs de position sans fil, du signal pilote inverse reçu et estimer la position du premier dispositif mobile en fonction dudit attribut.

dans lequel le signal pilote inverse du premier dispositif mobile est brouillé en quadrature par une séquence pseudo-aléatoire unique qui est fonction du Numéro de Série Électronique (ESN) du premier dispositif mobile.

**24.** Système selon la revendication 23, dans lequel ledit attribut est sélectionné dans le groupe suivant : un instant d'arrivée, un angle d'arrivée et un niveau de puissance reçue.

**25.** Système selon la revendication 23 ou 24, dans lequel le premier dispositif mobile fonctionne dans un système de communication sans fil comportant au moins une station de base pour communiquer avec le dispositif mobile.

**26.** Système selon la revendication 23, dans lequel ledit attribut est une différence d'instants d'arrivée.

**27.** Système selon la revendication 26, dans lequel l'étape de détermination de la différence d'instants d'arrivée comprend la corrélation du signal pilote inverse avec un signal de référence.

**28.** Système selon la revendication 26, dans lequel l'étape de détermination de la différence d'instants d'arrivée comprend un traitement de fonction d'ambiguïté du signal pilote inverse avec un signal de référence.

**29.** Système selon la revendication 25, dans lequel le capteur de position sans fil est éloigné géographiquement de ladite au moins une station de base.

**30.** Système selon la revendication 25, dans lequel le signal pilote inverse émis par le premier dispositif mobile est utilisé par ladite au moins une station de base pour une démodulation cohérente d'un signal de communication émis par le premier dispositif mobile.

**31.** Système selon la revendication 25, dans lequel le système de détermination de position est un système de détermination de position par recouvrement de réseau.

**32.** Système selon la revendication 23, dans lequel le signal pilote inverse émis par le premier dispositif mobile est généré en fonction d'un code d'étalement long pour le premier dispositif mobile.

**33.** Système selon l'une quelconque des revendications 23 à 32, dans lequel le serveur de commande de géo-localisation comprend :

un générateur de signal de référence pour générer un signal de référence ;
un dispositif d'inter-corrélation ou de fonction d'ambigüité pour déterminer l'attribut du signal pilote inverse reçu ; et
un estimateur de position pour estimer la position du premier dispositif mobile en fonction dudit attribut.

**34.** Système selon la revendication 33, dans lequel le dispositif d'inter-corrélation ou de fonction d'ambigüité détermine la différence d'instants d'arrivée du signal pilote inverse reçu pour au moins deux des capteurs de position sans fil et dans lequel l'estimateur de position estime la position du premier dispositif mobile en fonction de la différence d'instants d'arrivée.

**35.** Système selon l'une quelconque des revendications 23 à 34, dans lequel la position du premier dispositif mobile est déterminée indépendamment de l'état du premier dispositif mobile.

**FIGURE 1**

PRIOR ART

# FIGURE 2

PRIOR ART

EP 1 532 601 B1

# FIGURE 3

PRIOR ART

FIGURE 4

FIGURE 5

EP 1 532 601 B1

601
**TRANSMITTING REVERSE PILOT SIGNAL**

602
**RECEIVING REVERSE PILOT SIGNAL**

604
**CORRELATING RECEIVED REVERSE PILOT SIGNAL**

603
**GENERATING REFERENCE**

606
**DETERMINING TIME-OF-ARRIVAL**

608
**ESTIMATING LOCATION**

# FIGURE 6

EP 1 532 601 B1

701

REVERSE PILOT = $W_0^{32}$ = (000....0)

710A 710 711

704

I CHANNEL SHORT CODE

+ I CHAN
-

710B

702

USER LONG CODE MASK

703

LONG CODE GEN

751

709

$W2_2$

705

1 CHIP DELAY

751

708

DECIMATE BY 2

720B

706

Q CHANNEL SHORT CODE

+ Q CHAN
+

721

720A 720

20

FIGURE 7

## EP 1 532 601 B1

### REFERENCES CITED IN THE DESCRIPTION

**Patent documents cited in the description**

- US 38483602 P
- US 00444901 A
- US 5327144 A, Stilp
- US 5317323 A, Kennedy
- US 6246884 B1
- US 6047192 A